# EUROPÄISCHE PATENTSCHRIFT

(11) **EP 1 490 214 B1**
(45) Veröffentlichungstag und Bekanntmachung des Hinweises auf die Patenterteilung: **26.10.2005**
(21) Anmeldenummer: 03712016.9
(22) Anmeldetag: 14.03.2003
(51) Int. Cl.: B32B 7/02, B32B 27/00, C08J 7/06, G02B 1/11

(54) **KUNSTSTOFFFOLIE MIT MEHRSCHICHT-INTERFERENZBESCHICHTUNG**
PLASTIC FILM WITH A MULTILAYERED INTERFERENCE COATING
FEUILLE EN MATIERE PLASTIQUE A REVETEMENT D'INTERFERENCE MULTICOUCHE

(30) Priorität: 22.03.2002 DE 10213036
(43) Veröffentlichungstag der Anmeldung: 29.12.2004
(73) Patentinhaber: Clariant GmbH, 65929 Frankfurt am Main (DE)
(72) Erfinder: ZIMMERMANN, Andreas, 64347 Griesheim (DE); KITA, Fumio, 65187 Wiesbaden (DE); BERNI, Anette, 66894 Käshofen (DE); MENNIG, Martin, 66287 Quierschied (DE); OLIVEIRA, Peter, W., 66111 Saarbrücken (DE); SCHMIDT, Helmut, 66130 Saarbrücken-Güdingen (DE); HARADA, Takamasa, Chiba 270-13 (JP)
(74) Vertreter: Isenbruck, Günter
(86) Internationale Anmeldenummer: PCT/EP2003/002676
(87) Internationale Veröffentlichungsnummer: WO 2003/080328

(56) Entgegenhaltungen:
- US-A- 5 935 717
- US-A- 5 976 297
- PATENT ABSTRACTS OF JAPAN vol. 1997, no. 12, 25. Dezember 1997 (1997-12-25) & JP 09 222504 A (DAINIPPON PRINTING CO LTD), 26. August 1997 (1997-08-26)

## Beschreibung

Die Erfindung betrifft eine Kunststofffolie mit einem darauf aufgebrachten Interferenz-Mehrschichtsystem, ein Verfahren zur Herstellung dieser Kunststofffolie, ein Verbundmaterial aus einem Substrat und einer auflaminierten Kunststofffolie mit Interferenz-Mehrschichtsystem und Verwendungen dieser Kunststofffolie oder dieses Verbundmaterials.

Folien aus Kunststoff, die einseitig Interferenzschichtpakete tragen, werden z.B. für spezielle Filter oder für bestimmte optische Anwendungen in der Architektur oder im Fahrzeugbau, insbesondere für spezielle Verschreibungen, benötigt, wo sie als Entspiegelungs-, NIR-Reflexions-, IR-Reflexions- oder Farbfilterschichten dienen können. Die Kunststofffolien mit den Interferenzschichtpaketen werden z.B. auf massive Scheiben aus Glas oder Kunststoff laminiert. Aus dem Stand der Technik bekannte Interferenzschichtpakete aus hoch- und niedrigbrechenden optischen Schichten (λ/4-Schichten) werden über Vakuum-Beschichtungsverfahren (Sputtern) abgeschieden. Dabei können aber nur geringe Abscheidungsraten realisiert werden, so dass die Folien entsprechend teuer sind. Durch das Sputterverfahren können nur rein anorganische Schichten aufgebracht werden.

Aus dem Stand der Technik sind auch nasschemische Beschichtungen nach dem Sol-Gel-Verfahren bekannt. US 5,976,297 und US 5,935,717 offenbaren flexible, nasschemisch beschichtete Antireflex-Kunststofffolien.

Weiterhin ist bekannt, dass flexible Kunststofffolien über nasschemische Verfahren mit anderen funktionellen Beschichtungen versehen werden können, z.B. zur Herstellung von Magnetbändern für Audio- oder Videokassetten, Tintenstrahl-Overheadfolien oder Folien zur Oberflächendekoration mittels Heißprägen. Hierfür werden Folienbeschichtungsverfahren eingesetzt, beispielsweise das Messer-Gießen (Rakelmesser-Streichverfahren), Beschichten mit Schlitzdüse (Slot-Coating), Kiss-Coating mit Spiralschaber, Meniskus-Beschichten, Walzenbeschichten oder Umkehrwalzenbeschichten (Reverse-Roll-Coating).

Aufgabe der Erfindung war es, ein einfaches Verfahren zur Herstellung von optischen Interferenz-Mehrschichtsystemen auf Kunststofffolien und entsprechende Erzeugnisse bereitzustellen.

Gegenstand der Erfindung ist eine Kunststofffolie mit einem darauf aufgebrachten optischen Interferenz-Mehrschichtsystem umfassend mindestens zwei Schichten, die jeweils erhältlich sind durch Verfestigung und/oder Wärmebehandlung einer Beschichtungszusammensetzung, die nanoskalige anorganische Feststoffteilchen mit polymerisierbaren und/oder polykondensierbaren organischen Oberflächengruppen enthält, unter Bildung einer über die polymerisierbaren und/oder polykondensierbaren organischen Oberflächengruppen vernetzten Schicht. Bei den erhaltenen Schichten handelt es sich jeweils um organisch modifizierte anorganische Schichten.

Die Verfestigung kann durch Wärmebehandlung, Lichteinwirkung (UV, Vis), einfaches Stehen lassen bei Raumtemperatur oder durch eine Kombination dieser Maßnahmen herbeigeführt werden.

Gegenstand der Erfindung ist ferner ein Verfahren zur Herstellung dieser Kunststofffolie mit Mehrschicht-Interferenzbeschichtung, das folgende Stufen umfasst:
a) Aufbringen eines Beschichtungssols, das nanoskalige anorganische Feststoffteilchen mit polymerisierbaren und/oder polykondensierbaren organischen Oberflächengruppen enthält, auf die Kunststofffolie,
b) Verfestigung des in a) aufgebrachten Beschichtungssols, gegebenenfalls unter Vernetzung der polymerisierbaren und/oder polykondensierbaren organischen Oberflächengruppen der Feststoffteilchen unter Bildung einer zumindest teilweise organisch vernetzten Schicht,
c) Aufbringen eines weiteren Beschichtungssols, das nanoskalige anorganische Feststoffteilchen mit polymerisierbaren und/oder polykondensierbaren organischen Oberflächengruppen enthält, auf die in b) verfestigte Schicht,
d) Verfestigung des in c) aufgebrachten Beschichtungssols, gegebenenfalls unter Vernetzung der polymerisierbaren und/oder polykondensierbaren organischen Oberflächengruppen der Feststoffteilchen, unter Bildung einer weiteren verfestigten Schicht,
e) gegebenenfalls ein- oder mehrmaliges Wiederholen der Schritte c) und d) unter Bildung weiterer verfestigter Schichten,
   und
f) Wärmebehandlung und/oder Bestrahlung des entstandenen Schichtverbunds, wobei dieser Schritt zusammen mit dem Schritt d) für die oberste Schicht ausgeführt werden kann.

Die Schritte b) und d) werden durch Wärmebehandlung, Bestrahlung (UV, Vis), einfaches Stehen lassen bei Raumtemperatur oder durch eine Kombination dieser Maßnahmen durchgeführt.
Im Schritt f) ist eine Wärmebehandlung bevorzugt.

Ein Interferenz-Mehrschichtsystem besteht aus mindestens zwei Schichten aus Materialien mit unterschiedlichen Brechungsindices (Brechzahlen). An den Trennflächen zwischen den Schichten wird jeweils ein Teil des einfallenden Lichts reflektiert. Je nach Material und Dicke der Schichten löschen sich die Reflexe aus (negative Interferenz) oder verstärken sich (positive Interferenz).

Überraschenderweise hat sich gezeigt, dass mit der erfindungsgemäß eingesetzten Beschichtungszusammensetzung Kunststofffolien in einem nasschemischen Folienbeschichtungsverfahren mit einem Interferenz-Mehrschichtsystem versehen werden können. Erfindungsgemäß lassen sich die gewünschten Brechzahlen für jede Schicht durch Auswahl der Beschichtungszusammensetzungen gezielt einstellen, wobei die mindestens zwei Schichten unterschiedliche Brechungsindices aufweisen.

In der vorliegenden Beschreibung werden unter "nanoskaligen anorganischen Feststoffteilchen" insbesondere solche mit einem mittleren Teilchendurchmesser von nicht mehr als 200 nm, vorzugsweise nicht mehr als 100 nm und insbesondere nicht mehr als 70 nm, z.B. 5 bis 100 nm, vorzugsweise 5 bis 70 nm verstanden. Ein besonders bevorzugter Teilchengrößenbereich liegt bei 5 bis 10 nm. '

Die nanoskaligen anorganischen Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃, Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, CdI₂ und Pbl₂; Carbiden wie CdC₂ oder SiC; Arseniden wie AlAs, GaAs und, GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. Indium-Zinn-Oxiden (ITO) und solchen mit Perowskitstruktur wie BaTiO₃ und PbTiO₃).

Bevorzugt handelt es sich bei den im erfindungsgemäßen Verfahren eingesetzten nanoskaligen anorganischen Feststoffteilchen um (gegebenenfalls hydratisierte) Oxide, Sulfide, Selenide und Telluride von Metallen und Mischungen derselben. Erfindungsgemäß bevorzugt werden nanoskalige Teilchen von SiO₂, TiO₂, ZrO₂, ZnO, Ta₂O₅, SnO₂ und Al₂O₃ (in allen Modifikationen, insbesondere als Böhmit, AIO(OH)) sowie Mischungen derselben. Es hat sich herausgestellt, dass SiO₂ und/oder TiO₂ als nanoskalige anorganische Feststoffteilchen für die Feststoffteilchen mit polymerisierbaren und/oder polykondensierbaren organischen Oberflächengruppen für die Folienbeschichtung besonders geeignete Beschichtungszusammensetzungen ergeben. Die nanoskaligen Teilchen enthalten auf den Oberflächen noch reaktionsfähige Gruppen, so befinden sich z.B. auf den Oberflächen von Oxid-Teilchen im allgemeinen Hydroxidgruppen.

Da die erfindungsgemäß einsetzbaren nanoskaligen Teilchen einen breiten Bereich von Brechzahlen abdecken, kann durch geeignete Auswahl dieser nanoskaligen Teilchen die Brechzahl der Schicht(en) in bequemer Weise auf den gewünschten Wert eingestellt werden.

Die Herstellung der erfindungsgemäß eingesetzten nanoskaligen Feststoffteilchen kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben. Insbesondere können z.B. Metalle (beispielsweise nach der Reduktion der Fällungsverfahren), keramische oxidische Systeme (durch Ausfällung aus Lösung), aber auch salzartige oder Mehrkomponentensysteme herangezogen werden. Zu den salzartigen oder Mehrkomponentensystemen zählen auch Halbleitersysteme.

Es können auch im Handel erhältliche nanoskalige anorganische Feststoffteilchen verwendet werden. Beispiele für im Handel erhältliche nanoskalige SiO₂-Teilchen sind handelsübliche Kieselsäureprodukte, z.B. Kieselsole, wie die Levasile®, Kieselsole der Bayer AG, ®Klebosol der Fa. Cleriant, oder pyrogene Kieselsäuren, z.B. die Aerosil-Produkte von Degussa.

Die Herstellung der mit polymerisierbaren und/oder polykondensierbaren organischen Oberflächengruppen versehenen nanoskaligen anorganischen Feststoffteilchen, die erfindungsgemäß eingesetzt werden, kann prinzipiell auf zwei verschiedenen Wegen durchgeführt werden, nämlich zum einen durch Oberflächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die über derartige polymerisierbare und/oder polykondensierbare Gruppierungen verfügen. Diese beiden Wege werden weiter unten und in den Beispielen näher erläutert.

Bei den organischen polymerisierbaren und/oder polykondensierbaren Oberflächengruppen kann es sich um beliebige, dem Fachmann bekannte Gruppen handeln, die einer radikalischen, kationischen oder anionischen, thermischen oder photochemischen Polymerisation oder einer thermischen oder photochemischen Polykondensation zugänglich sind, wobei gegebenenfalls ein oder mehrere geeignete Initiatoren bzw. Katalysatoren zugegen sind. Der Ausdruck Polymerisation schließt hier auch die Polyaddition ein. Die für die jeweiligen Gruppen gegebenenfalls einsetzbaren Initiatoren bzw. Katalysatoren sind dem Fachmann bekannt. Erfindungsgemäß bevorzugt werden Oberflächengruppen, die über eine (Meth)acryl-, Allyl-, Vinyl- oder Epoxygruppe verfügen, wobei (Meth)acryl- und Epoxygruppen besonders bevorzugt werden. Bei den polykondensationsfähigen Gruppen wären vor allem Hydroxy-, Carboxy- und Aminogruppen zu nennen, mit deren Hilfe Ether-, Ester- und Amidbindungen zwischen den nanoskaligen Teilchen erhalten werden können.

Wie bereits erwähnt, können die polymerisierbaren und/oder polykondensierbaren Oberflächengruppen prinzipiell auf zwei Wegen bereitgestellt werden. Wird eine Oberflächenmodifizierung bereits hergestellter nanoskaliger Teilchen durchgeführt, eignen sich zu diesem Zweck alle (vorzugsweise niedermolekularen) Verbindungen, die zum einen über eine oder mehrere Gruppen verfügen, die mit auf der Oberfläche der nanoskaligen Feststoffteilchen vorhandenen reaktionsfähigen Gruppen (wie beispielsweise OH-Gruppen im Falle von Oxiden) reagieren oder zumindest wechselwirken können, und zum anderen mindestens eine polymerisierbare und/oder polykondensierbare Gruppe aufweisen. Eine Oberflächenmodifizierung der nanoskaligen Teilchen kann z.B. durch Mischen der nanoskaligen Teilchen mit nachstehend erläuterten geeigneten Verbindungen gegebenenfalls in einem Lösungsmittel und unter Anwesenheit eines Katalysators erfolgen. Bei Silanen als Oberflächenmodifizierungsmittel genügt z.B. ein mehrstündiges Rühren mit den nanoskaligen Teilchen bei Raumtemperatur.

Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten und/oder koordinativen Bindungen.

Erfindungsgemäß bevorzugt ist es auch, dass die an den Oberflächen der nanoskaligen Teilchen vorhandenen organischen Gruppierungen, die die polymerisierbaren und/oder polykondensierbaren Gruppen umfassen, ein relativ niedriges Molekulargewicht aufweisen. Insbesondere sollte das Molekulargewicht der (rein organischen) Gruppierungen 500 g/mol und vorzugsweise 300 g/mol, besonders bevorzugt 200 g/mol, nicht übersteigen. Dies schließt selbstverständlich ein deutlich höheres Molekulargewicht der diese Gruppierungen umfassenden Verbindungen (Moleküle) nicht aus (z.B. bis zu 1.000 g/mol und mehr).

Beispiele für zur Oberflächenmodifizierung der nanoskaligen anorganischen Feststoffteilchen einsetzbare organische Verbindungen sind ungesättigte Carbonsäuren, β-Dicarbonyl-Verbindungen, z.B. β-Diketone oder β-Carbonylcarbonsäuren, mit polymerisierbaren Doppelbindungen, ethylenisch ungesättigte Alkohole und Amine, Aminosäuren, Epoxide und Diepoxide. Bevorzugt eingesetzte Verbindungen zur Oberflächenmodifizierung sind Diepoxide, β-Diketone, Methacrylsilane und Epoxysilane.

Konkrete Beispiele für organische Verbindungen zur Oberflächenmodifizierung sind Diepoxide wie 3,4-Epoxycyclohexylmethyl-3,4-epoxycyclohexancarboxylat, Bis-(3,4-epoxycyclohexyl)adipat, Cyclohexandimethanoldiglycidether, Neopentylglycol-diglycidether, 1,6-Hexandioldiglycidether, Propylenglycoldiglycidether, Bisphenol-A-diglycidether, Bisphenol-F-diglycidether, ungesättigte Carbonsäuren wie Acrylsäure und Methacrylsäure.

Weitere besonders bevorzugte Verbindungen zur Oberflächenmodifizierung der nanoskaligen anorganischen Feststoffteilchen sind insbesondere bei oxidischen Teilchen hydrolytisch kondensierbare Silane mit mindestens (und vorzugsweise) einem nicht hydrolysierbaren Rest, der über eine polymerisierbare und/oder polykondensierbare Gruppe verfügt, wobei es sich bevorzugt um eine polymerisierbare Kohlenstoff-Kohlenstoff-Doppelbindung oder eine Epoxygruppe handelt. Vorzugsweise weisen derartige Silane die allgemeine Formel (I) auf:

X - R¹ - SiR² ₃ (I)

worin X für CH₂=CR³-COO, CH₂=CH, Epoxy, Glycidyl oder Glycidyloxy steht, R³ Wasserstoff oder Methyl darstellt, R¹ ein zweiwertiger Kohlenwasserstoffrest mit 1 bis 10, vorzugsweise 1 bis 6 Kohlenstoffatomen ist, der gegebenenfalls eine oder mehrere Heteroatomgruppierungen (z.B. O, S, NH) enthält, die benachbarte Kohlenstoffatome voneinander trennen, und die Reste R², die gleich oder verschieden voneinander sind, sind aus Alkoxy-, Aryloxy-, Acyloxy- und Alkylcarbonylgruppen sowie Halogenatomen (insbesondere F, Cl und/oder Br) ausgewählt.

Die Gruppen R² können voneinander verschieden sein, sind aber bevorzugt identisch. Vorzugsweise sind die Gruppen R² ausgewählt aus Halogenatomen, C₁₋₄-Alkoxygruppen (z.B. Methoxy, Ethoxy, n-Propoxy, i-Propoxy und Butoxy), C₆₋₁₀-Aryloxygruppen (z.B. Phenoxy), C₁₋₄-Acyloxygruppen (z.B. Acetoxy und Propionyloxy) und C₂₋₁₀-Alkylcarbonylgruppen (z.B. Acetyl). Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Methylen, Ethylen, Propylen, Butylen und Hexylen. Wenn X für CH₂=CH steht, bedeutet R¹ vorzugsweise Methylen und kann in diesem Fall auch eine bloße Bindung bedeuten.
Vorzugsweise stellt X CH₂=CR³-COO (wobei R³ vorzugsweise CH₃ ist) oder Glycidyloxy dar. Dementsprechend sind besonders bevorzugte Silane der allgemeinen Formel (I) (Meth)acryloxyalkyltrialkoxysilane, wie z.B. 3-Methacryloxypropyl-trimethoxysilan und 3-Methacryloxypropyltriethoxysilan und Glycidyloxyalkyltrialkoxysilane, wie beispielsweise 3-Glycidyloxypropyltrimethoxysilan und 3-Glycidyloxypropyl-triethoxysilan.

Erfolgt bereits die Herstellung der nanoskaligen anorganischen Feststoffteilchen unter Verwendung einer oder mehrerer Verbindungen, die über polymerisierbare und/oder polykondensierbare Gruppen verfügen, kann von einer nachträglichen Oberflächenmodifizierung abgesehen werden, obwohl diese selbstverständlich als zusätzliche Maßnahme möglich ist.

Die in situ-Herstellung von nanoskaligen anorganischen Feststoffteilchen mit polymerisierbaren und/oder polykondensierbaren Oberflächengruppen wird im folgenden am Beispiel von SiO₂-Teilchen erläutert. Zu diesem Zweck können die SiO₂-Teilchen z.B. nach dem Sol-Gel-Verfahren unter Verwendung mindestens eines hydrolytisch polykondensierbaren Silans mit mindestens einer polymerisierbaren und/oder polykondensierbaren Gruppe hergestellt werden. Als derartige Silane eignen sich beispielsweise die oben beschriebenen Silane der allgemeinen Formel (I). Diese Silane werden entweder allein oder in Kombination mit einem geeigneten Silan der allgemeinen Formel (II)

SiR² ₄ (II)

worin R² die oben angegebene Bedeutung aufweist, eingesetzt. Bevorzugte Silane der obigen allgemeinen Formel (II) sind Tetramethoxysilan und Tetraethoxysilan.

Selbstverständlich ist es auch möglich, zusätzlich oder alternativ zu den Silanen der allgemeinen Formel (II) andere hydrolysierbare Silane einzusetzen, z.B. solche, die über mindestens eine nicht-hydrolysierbare Kohlenwasserstoffgruppe ohne polymerisierbare und/oder polykondensierbare Gruppe verfügen, wie beispielsweise Methyl- oder Phenyltrialkoxysilane. Dabei kann es sich um Silane der Formel (III) handeln

R⁴ ₙSiR² ₄₋ₙ (III)

worin R² wie oben definiert ist, der nicht hydrolysierbare Rest R⁴ eine Alkylgruppe, vorzugsweise C₁₋₆-Alkyl, wie z.B. Methyl, Ethyl, n-Propyl, Isopropyl, n-Butyl, s-Butyl und t-Butyl, Pentyl oder Hexyl, eine Cycloalkylgruppe mit 5 bis 12 C-Atomen, wie Cyclohexyl, oder eine Arylgruppe, vorzugsweise C₆₋₁₀-Aryl, wie z.B. Phenyl und Naphthyl, ist und n 1, 2 oder 3, bevorzugt 1 oder 2 und insbesondere 1 ist. Der genannte Rest R⁴ kann gegebenenfalls einen oder mehrere übliche Substituenten, wie z.B. Halogen, Ether-, Phosphorsäure-, Sulfonsäure-, Cyano-, Amid-, Mercapto-, Thioether- oder Alkoxygruppen, aufweisen.

Im erfindungsgemäßen Verfahren wird eine Beschichtungszusammensetzung, die die vorstehend genannten nanoskaligen anorganischen Feststoffteilchen enthält, auf die Kunststofffolie oder auf eine bereits aufgebrachte Schicht aufgetragen. Bei der aufgetragenen Beschichtungszusammensetzung handelt es sich insbesondere um ein Beschichtungssol, d.h. eine Dispersion der vorstehend definierten nanoskaligen anorganischen Feststoffteilchen mit polymerisierbaren und/oder polykondensierbaren organischen Oberflächengruppen in einem Lösungsmittel bzw. einem Lösungsmittelgemisch. Die Beschichtungszusammensetzung ist beim Auftrag fließfähig.

Bei dem Lösungsmittel kann es sich um jedes dem Fachmann bekannte Lösungsmittel handeln. Das Lösungsmittel kann zum Beispiel Wasser und/oder ein organisches Lösungsmittel sein. Das organische Lösungsmittel ist vorzugsweise mit Wasser mischbar. Beispiele für geeignete organische Lösungsmittel sind Alkohole, Ether, Ketone, Ester, Amide und deren Mischungen. Bevorzugt werden Alkohole, z.B. aliphatische oder alicyclische Alkohole, oder Mischungen von Alkoholen als Lösungsmittel eingesetzt, wobei einwertige Alkohole bevorzugt sind. Bevorzugt handelt es sich um lineare oder verzweigte einwertige Alkanole mit 1 bis 8, bevorzugt 1 bis 6 Kohlenstoffatomen. Besonders bevorzugte Alkohole sind Methanol, Ethanol, n-Propanol, 2-Propanol, n-Butanol, 2-Butanol, Isobutanol, tert.-Butanol oder Gemische davon.

Das Lösungsmittel oder ein Teil davon können sich auch im Zuge der Herstellung der nanoskaligen Teilchen oder der Oberflächenmodifizierung bilden. So werden z.B. bei der Herstellung von SiO₂-Teilchen aus Alkoxysilanen die entsprechenden Alkohole freigesetzt, die dann als Lösungsmittel fungieren können.

Es wurde überraschenderweise festgestellt, dass sich die Beschichtungssole für die erfindungsgemäße Beschichtung insbesondere dann eignen, wenn sie für den Auftrag hochverdünnt eingesetzt werden. Der Gesamtfeststoffgehalt des aufzutragenden Beschichtungssols beträgt zweckmäßigerweise nicht mehr als 40 Gew.-%, bevorzugt nicht mehr als 20 Gew.-%, insbesondere nicht mehr als 15 Gew.-%. Vorzugsweise beträgt der Gesamtfeststoffgehalt 0,5 bis 5 Gew.-%, besonders bevorzugt 1 bis 3 Gew.-%.

Sofern der Gesamtfeststoffgehalt des Beschichtungssols nicht mehr als 40 Gew.-% beträgt, können ausgezeichnete Beschichtungen auf den Kunststofffolien erhalten werden. Wenn das Beschichtungssol eine geringe Verdünnung, also einen relativ hohen Gesamtfeststoffgehalt, aufweist, sind große Nassfilmdicken der Beschichtungen nicht zu erreichen. Geeignete Nassfilmdicken des aufgetragenen Beschichtungssols liegen typischerweise im unteren µm-Bereich, z.B. bei 0,5 µm bis 10 µm.

Ein zusätzlicher Bestandteil des Beschichtungssols kann beispielsweise mindestens eine monomere oder oligomere Spezies sein, die über mindestens eine Gruppe verfügt, die mit den an der Oberfläche der nanoskaligen Teilchen vorhandenen polymerisierbaren und/oder polykondensierbaren Gruppen reagieren (polymerisieren bzw. polykondensieren) kann. Als derartige Spezies eignen sich z.B. Monomere mit einer polymerisierbaren Doppelbindung wie beispielsweise Acrylsäureester, Methacrylsäureester, Styrol, Vinylacetat und Vinylchlorid. Bevorzugte monomere Verbindungen mit mehr als einer polymerisierbaren Bindung sind insbesondere solche der allgemeinen Formel (IV):

(CH₂ = CR³ - COZ-)ₘ - A (IV)

worin
m = 2, 3 oder 4, vorzugsweise 2 oder 3 und insbesondere 2,
Z = O oder NH, vorzugsweise O,
R³ = H, CH₃,
A = m-wertiger Kohlenwasserstoffrest mit 2 bis 30, insbesondere 2 bis 20 Kohlenstoffatomen, der eine oder mehrere Heteroatomgruppierungen aufweisen kann, die sich jeweils zwischen zwei benachbarten Kohlenstoffatomen befinden (Beispiele für derartige Heteroatomgruppierungen sind O, S, NH, NR (R = Kohlenwasserstoffrest), vorzugsweise O).

Weiter kann der Kohlenwasserstoffrest A einen oder mehrere Substituenten tragen, die vorzugsweise ausgewählt sind aus Halogen (insbesondere F, Cl und/oder Br), Alkoxy (insbesondere C₁₋₄-Alkoxy), Hydroxy, gegebenenfalls substituiertem Amino, NO₂, OCOR⁵, COR⁵ (R⁵ = C₁₋₆-Alkyl oder Phenyl). Vorzugsweise ist der Rest A jedoch unsubstituiert oder mit Halogen und/oder Hydroxy substituiert.

In einer Ausführungsform der vorliegenden Erfindung ist A von einem aliphatischen Diol, einem Alkylenglycol, einem Polyalkylenglycol oder einem gegebenenfalls alkoxylierten (z.B. ethoxylierten) Bisphenol (z.B. Bisphenol A) abgeleitet.

Weitere einsetzbare Verbindungen mit mehr als einer Doppelbindung sind z.B. Allyl(meth)acrylat, Divinylbenzol und Diallylphthalat. Ebenso kann z.B. eine Verbindung mit zwei oder mehr Epoxygruppen verwendet werden (im Fall der Verwendung von epoxidhaltigen Oberflächengruppen), z.B. Bisphenol A-diglycidylether oder auch ein (oligomeres) Vorkondensat eines epoxidgruppenhaltigen hydrolysierbaren Silans wie Glycidoxypropyltrimethoxysilan.

Der Anteil an organischen Komponenten in den erfindungsgemäß verwendeten Beschichtungssolen beträgt vorzugsweise nicht mehr als 20 Gew.-%, z.B. 4 bis 15 Gew.-%, bezogen auf den Gesamtfeststoffgehalt. Für Schichten mit hoher Brechzahl kann er z.B. 5 Gew.-%, für Schichten mit niedriger Brechzahl z.B. 15 Gew.-% betragen. Bevorzugt werden aber keine derartigen organischen Komponenten eingesetzt.

Das erfindungsgemäß verwendete Beschichtungssol hat vorzugsweise einen pH-Wert ≥3, besonders bevorzugt ≥4. Im allgemeinen liegt der pH im Neutralbereich bis etwa 8, vorzugsweise bis etwa 7,5.

Gegebenenfalls können dem Beschichtungssol auch weitere, für Folienbeschichtungen übliche Additive zugesetzt werden. Beispiele sind thermische oder photochemische Vernetzungsinitiatoren, Sensibilisierungsmittel, Netzhilfsmittel, Haftvermittler, Verlaufmittel, Antioxidationsmittel, Stabilisatoren, Vernetzungsmittel, Metallkolloide, z.B. als Träger optischer Funktionen. Neben den später erläuterten, gegebenenfalls einzusetzenden thermischen oder photochemischen Vernetzungsinitatoren enthält das Beschichtungssol aber keine weiteren Komponenten, d.h. das Beschichtungssol bzw. die Beschichtungszusammensetzung besteht bevorzugt aus den nanoskaligen Feststoffteilchen mit polymerisierbaren und/oder polykondensierbaren organischen Oberflächengruppen, dem oder den Lösungsmitteln und gegebenenfalls einem oder mehreren thermischen oder photochemischen Vernetzungsinitiatoren.

Folien sind im Gegensatz zu sonstigen starren Substraten flexibel und erfordern daher spezielle Beschichtungstechniken und -zusammensetzungen. Bei der zu beschichtenden Kunststofffolie kann es sich um eine herkömmliche, in der Technik gebräuchliche Folie handeln, bevorzugt eine Folie von begrenzter Länge. Spezielle Beispiele sind Folien aus Polyethylen, z.B. HDPE oder LDPE, Polypropylen, Cellulosetriacetat (TAC), Polyisobutylen, Polystyrol, Polyvinylchlorid, Polyvinylidenchlorid, Polytetrafluorethylen, Polychlortrifluorethylen, Polyamid, Poly(meth)acrylate, Polyethylenterephthalat, Polycarbonat, regenerierte Cellulose, Cellulosenitrat, Celluloseacetat, Cellulosetriacetat, Celluloseacetatbutyrat oder Kautschuk-Hydrochlorid. Die Kunststofffolie ist vorzugsweise transparent. Natürlich können auch Verbundfolien, z.B. aus den oben genannten Materialien, eingesetzt werden.

Die Kunststofffolie kann vorbehandelt sein. Sie kann z.B. vor der erfindungsgemäßen Beschichtung einer Coronabehandlung unterzogen werden oder mit einer Vorbeschichtung, z.B. zur Haftvermittlung, einem Hardcoat und/oder einer Antiglare-Beschichtung, versehen werden.
In Stufe a) des erfindungsgemäßen Verfahrens wird das Beschichtungssol mit einem Folienbeschichtungsverfahren auf die Kunststofffolie aufgebracht, um diese (auf einer Seite) ganz oder teilweise zu beschichten. Die Beschichtung erfolgt an einzelnen Folienstücken oder bevorzugt in einem kontinuierlichen Beschichtungsverfahren. Als Beschichtungsverfahren eignen sich die herkömmlichen und dem Fachmann bekannten Folienbeschichtungsverfahren. Beispiele hierfür sind Messer-Gießen (Rakelmesser-Streichverfahren), Beschichten mit Schlitzdüse, Kiss-Coating mit Spiralschaber, Meniskus-Beschichten, Walzenbeschichten oder Umkehrwalzenbeschichten (Reverse-Roll-Coating).

Für das erfindungsgemäße Verfahren hat sich das Umkehrwalzenbeschichten als besonders geeignet erwiesen. Bei diesem Verfahren wird das Beschichtungssol von einer Tauchwalze aufgenommen und über einen Meniskus-Beschichtungsschritt über eine Transferwalze auf eine Druckwalze (Masterwalze) übertragen. Bei geeignet hoher Präzision der Walzen und der Antriebe ist der Spalt zwischen beiden Walzen hinreichend konstant. Der auf der Druckwalze befindliche Nassfilm wird dann gewöhnlich vollständig auf die Substratfolie abgelegt. Dadurch wird die auf der Folie abgeschiedene Nassfilmdicke von möglichen Dickenschwankungen der Folie unabhängig. Durch Einsatz des Umkehrwalzenverfahrens lassen sich überraschenderweise besonders präzise und gleichmäßige Interferenz-Mehrschichtsysteme auf Kunststofffolien aufbringen, so dass der Einsatz dieses Verfahrens eine besonders bevorzugte Ausführungsform des erfindungsgemäßen Verfahrens darstellt.

Vor dem Aufbringen auf die Folie kann das Beschichtungssol zum Beispiel durch Zugabe von Lösungsmittel auf eine geeignete Viskosität bzw. auf einen geeigneten Feststoffgehalt eingestellt werden. Hierbei werden insbesondere die vorstehend aufgeführten hochverdünnten Beschichtungssole hergestellt. Nach dem Auftrag kann gegebenenfalls ein Trocknungsschritt erfolgen, insbesondere wenn die Vernetzung nicht über eine Wärmebehandlung durchgeführt wird.

In Stufe b) des erfindungsgemäßen Verfahrens erfolgt eine Verfestigung des in a) aufgebrachten Beschichtungssols, z. B. durch Verdampfung des Lösungsmittels und/oder durch Vernetzung der polymerisierbaren und/oder polykondensierbaren Oberflächengruppen der nanoskaligen anorganischen Feststoffteilchen (gegebenenfalls über die polymerisierbaren und/oder polykondensierbaren Gruppen der zusätzlich eingesetzten monomeren oder oligomeren Spezies). Die Vernetzung kann mittels üblicher Polymerisations- und/oder Polykondensationsreaktionen auf die dem Fachmann geläufige Art und Weise durchgeführt werden.

Beispiele für geeignete Vernetzungsmethoden sind die thermische und photochemische (z.B. mit UV-Strahlung) Vernetzung, die ElektronenstrahlHärtung, Laserhärtung oder Raumtemperaturhärtung. Gegebenenfalls erfolgt die Vernetzung in Anwesenheit eines geeigneten Katalysators bzw. Starters (Initiators), der dem Beschichtungssol spätestens unmittelbar vor Auftrag auf die Folie zugesetzt wird.

Als Initiator/Initiatorsysteme kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck); Benzophenon, 2-Chlorthioxanthon, 2-Methylthioxanthon, 2-Isopropyl-thioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.
Beispiele für radikalische Thermostarter sind u.a. organische Peroxide in Form von Diacylperoxiden, Peroxydicarbonaten, Alkylperestern, Alkylperoxiden, Perketalen, Ketonperoxiden und Alkylhydroperoxiden sowie Azo-Verbindungen. Als konkrete Beispiele wären hier insbesondere Dibenzoylperoxid, tert.-Butylperbenzoat und Azobisisobutyronitril zu nennen. Bei Vorliegen von Epoxygruppen für die Vernetzung können amingruppenhaltige Verbindungen als Thermostarter eingesetzt werden. Ein Beispiel ist Aminopropyltrimethoxysilan.

Ein Beispiel für einen kationischen Photostarter ist Cyracure® UVI-6974, während ein bevorzugter kationischer Thermostarter 1-Methylimidazol ist.
Diese Starter können in den üblichen, dem Fachmann bekannten Mengen, z.B. 0,01 bis 5 Gew.-%, insbesondere 0,1 bis 2 Gew.-%, bezogen auf den GesamtFeststoffgehalt des Beschichtungssols eingesetzt werden. Selbstverständlich kann je nach Fall unter Umständen ganz auf den Starter verzichtet werden.

Die Vernetzung in Stufe b) des erfindungsgemäßen Verfahrens erfolgt vorzugsweise thermisch oder durch Bestrahlung (insbesondere mit UV-Licht). Es können herkömmliche Lichtquellen für eine Photopolymerisation verwendet werden, insbesondere UV-Licht emittierende Quellen, z.B. Quecksilberdampflampen, Xenonlampen und Laserlicht. Bei Vernetzung über eine Wärmebehandlung hängt der geeignete Temperaturbereich naturgemäß insbesondere von den vorliegenden polymerisierbaren und/oder polykondensierbaren Oberflächengruppen der nanoskaligen anorganischen Feststoffteilchen, den gegebenenfalls eingesetzten Initiatoren, dem Verdünnungsgrad und der Dauer der Behandlung ab.

In der Regel erfolgt die Wärmebehandlung zur Vernetzung b) und d) in einem Temperaturbereich von 20 bis 130°C, bevorzugt 80 bis 120°C, insbesondere 100 bis 120°C. Die Dauer der Behandlung kann z.B. 30 Sekunden bis 5 Minuten, bevorzugt 1 bis 2 Minuten, betragen. Die Schritte b) und d) werden so ausgeführt, dass über die polymerisierbaren und/oder polykondensierbaren Oberflächengruppen zumindest teilweise eine Vernetzung erfolgt ist, es können auch im wesentlichen alle polymerisierbaren und/oder polykondensierbaren Oberflächengruppen für die Vernetzung bei diesem Schritt abreagieren.

Bei der Wärmebehandlung können vor, während oder nach der Vernetzung, in der Regel gleichzeitig mit der Vernetzung, weitere flüchtige Bestandteile, insbesondere das Lösungsmittel, aus der Beschichtungszusammensetzung verdampfen. Sofern zur Vernetzung keine Wärmebehandlung durchgeführt wird, kann eine Wärmebehandlung (zur Trocknung) im Anschluss an die Vernetzung ausgeführt werden.

Die Auftragmenge der Beschichtungszusammensetzung wird in Abhängigkeit von der gewünschten Brechzahl und dem Anwendungsbereich im allgemeinen so gewählt wird, dass Trockenschichtdicken im Bereich von 50 bis 300 nm, vorzugsweise 100 bis 150 nm, erzielt werden.

Auf die gebildete verfestigte Schicht werden gemäß den Schritten c) und d) und gegebenenfalls e) in zu den Schritten a) und b) analoger Weise eine oder mehrere weitere Schichten aufgebracht, bis der gewünschte Schichtverbund erhalten wird. Bei der letzten (obersten) Schicht ist eine separate Vernetzungsstufe gemäß b) bzw. d) nicht mehr unbedingt erforderlich, sondern diese kann, falls gewünscht, direkt gemeinsam mit der abschließenden Wärmebehandlungsstufe f) zur Nachbehandlung des Schichtverbunds erfolgen.

In der Stufe f) erfolgt eine Wärmebehandlung des Schichtverbunds. Die Wärmebehandlung hängt naturgemäß von der Folie und der Zusammensetzung der Schichten ab. In der Regel erfolgt die abschließende Wärmebehandlung aber bei Temperaturen im Bereich von 20 bis 200°C, vorzugsweise 80 bis 200°C, besonders bevorzugt 100 bis 160°C und insbesondere 110 bis 130°C. Die Dauer der Wärmebehandlung beträgt beispielsweise 10 Minuten bis 24 h, bevorzugt 3 Minuten bis 1 h. Es werden Interferenz-Mehrschichtsysteme auf Kunststofffolie ohne Rissbildung oder andere Defekte erhalten.

Die abschließende Wärmebehandlung des Schichtverbunds kann in den Schichten bzw. dem Schichtverbund z.B. zu einer weitgehenden Vervollständigung der organischen Vernetzung führen oder gegebenenfalls noch vorhandene Lösungsmittelreste entfernen. Bei der Wärmebehandlung kann es auch zu Kondensationsreaktionen zwischen den auf der Oberfläche der Feststoffteilchen noch befindlichen reaktiven Gruppen (z.B. (Si)-OH-Gruppen auf SiO₂-Teilchen) kommen, so dass die Feststoffteilchen in den Schichten neben den oben erläuterten organischen Vernetzungen über anorganische Kondensationsreaktionen miteinander verknüpft werden.

Nach einer besonders bevorzugten Ausführungsform besteht die Möglichkeit, die Beschichtungszusammensetzungen so auszuwählen, dass bei der fertigen Kunststofffolie mit Interferenz-Mehrschichtsystem im Bereich zwischen 400 nm und 650 nm Wellenlänge Restreflexwerte unter 0,5 % und bei 550 nm Wellenlänge Restreflexwerte unter 0,3 % erzielt werden.

Je nach Endanwendung können sich weitere Behandlungsschritte anschließen. Die beschichtete Folie kann z.B. auf der Seite, die der Seite mit dem Mehrschichtsystem gegenüberliegt, mit einer Klebschicht und gegebenenfalls einer Deckschicht versehen werden. Die Klebschicht kann z.B. zum Auflaminieren auf ein Substrat dienen. Eine Endlosfolie kann zurechtgeschnitten werden, um zu einer für die Endanwendung geeigneten Abmessung zu gelangen.

Die erfindungsgemäße Kunststofffolie mit darauf aufgebrachtem Interferenz-Mehrschichtsystem eignet sich insbesondere als optische Laminierfolie für Glas- und Kunststoffsubstrate. Dementsprechend ist Gegenstand der Erfindung auch ein Verbundmaterial aus einer Folie, einer Lackschicht oder einem insbesondere starren Substrat, das vorzugsweise aus Glas oder Kunststoff besteht und vorzugsweise transparent ist, auf das die erfindungsgemäße Kunststofffolie auflaminiert ist.

Geeignete Laminierungsverfahren sind dem Fachmann bekannt und es können alle üblichen Laminierungsverfahren angewandt werden. Beispielsweise erfolgt die Verbindung über eine Klebschicht, die auf der Folie, dem Substrat oder beiden aufgetragen werden kann. Bei Bedarf kann auch auf der Rückseite des Substrats eine Interferenzschicht aufgebracht werden.

Die erfindungsgemäß hergestellten Kunststofffolien mit Interferenz-Mehrschichtsystem oder die entsprechenden Verbundmaterialien eignen sich z.B. als Antireflexsysteme, insbesondere zur Entspiegelung, als Reflexionssysteme, Reflexfilter, Farbfilter für Beleuchtungs- oder für dekorative Zwecke.

Konkrete Anwendungsgebiete für die erfindungsgemäß hergestellten Kunststofffolien mit Interferenz-Mehrschichtsystem und die entsprechenden Verbundmaterialien sind z.B.
- Antireflexsysteme bzw. -beschichtungen für das sichtbare Licht im Bereich Architektur, z.B. Scheiben bzw. Fenster in Bauwerken, für Vitrinen- und Bilderverglasung, für Gewächshäuser, für Scheiben im Inneren von Fahrzeugen, z.B. Automobilen, LKW, Motorrädern, Schiffen und Flugzeugen;
   oder für Geräte mit Anzeigeelement, z.B. Computerbildschirme, Fernsehbildschirme oder Displays von Mobiltelefonen;
- beschichtete Folien als Rollo mit optischer bzw. dekorativer Wirkung,
- NIR-Reflexfilter (NIR = Nahes Infrarot),
- Entspiegelungen (NIR, Vis), z.B. für photovoltaische und andere optische Anwendungen (Solarzellen, Solarkollektoren),
- Farbfilter zur Beleuchtung oder für dekorative Zwecke,
- IR-Reflexionsschicht für Brand- und Hitzeschutzanwendungen,
- optische Folien, wie z.B. Polarisationsfolien, Retarderfolien.
- Effektbeschichtung auf lackierten Oberflächen,
- UV-Reflexfolien und
- Laserspiegel.

Beispiel: Herstellung einer 3-fach Entspiegelungsschicht

### 1 Synthese der Beschichtungssole

Die Antireflex-Beschichtungssole M, H, L (M: Sol für Schicht mit mittlerer Brechzahl, H: Sol für Schicht mit hoher Brechzahl, L: Sol für Schicht mit niedriger Brechzahl) wurden aus drei Grundsolen (H, Lr, Lo) hergestellt.

### 1.1. Synthese der Grundsole (Raumtemperatur)

### a) Grundsol H

Zu einer Mischung von 400 g 2-Propanol und 400 g 1-Butanol wurden 12,12 g HCl (16,9 gew.-%ig) gegeben. Zum Lösungsmittelgemisch wurden unter Rühren 79,61 g Titanisopropylat gegeben. Nach 24 h Rühren ist die Synthese abgeschlossen.

### b) Grundsol Lr

105,15 g Tetraethoxysilan wurden in 60 g Ethanol gelöst. Daneben wurde eine Lösung aus 41,5 g HCl (0,69 gew.-%ig) und 60 g Ethanol hergestellt und der Tetraethoxysilan-Ethanol-Mischung unter Rühren zugefügt. Nach einer Reaktionszeit von 2 h wurde das Sol mit 500 g 2-Propanol und 500 g 1-Butanol verdünnt.

### c) Grundsol Lo

360,8 g Tetramethoxysilan wurden in 319,2 g Ethanol gelöst. Daneben wurde eine Lösung aus 6,9 g HCl (37 gew.-%ig), 362,5 g Wasser und 319,2 g Butanol hergestellt. Diese wurde der Tetramethoxysilan-Ethanol-Mischung unter Rühren zugefügt. Nach 2 h Rühren ist die Synthese abgeschlossen.

### 1.2. Herstellung der Beschichtungssole (ca. 1 l Sol)

### a) Sol M

76,8 g des Grundsols Lr wurden mit 419,2 g Grundsol H gemischt. Zu dieser Mischung wurden 2,976 g 1,4-Cyclohexandimethanoldiglycidylether (CHMG) unter Rühren zugetropft. Das Sol wurde mit 321,6 g 1-Butanol verdünnt.

### b) Sol H

Zu 480 g Grundsol H wurden 1,2 g 1,4-Cyclohexandimethanoldiglycidylether (CHMO) unter Rühren tropfenweise zugefügt. Das Sol wurde mit 321,6 g 1-Butanol verdünnt.

### c) Sol L

201,6 g Grundsol Lo wurden mit 624 g 1-Butanol verdünnt. Zu dieser Mischung wurden 1,44 g vorhydrolysiertes Glycidyloxypropyltrimethoxysilan (Hydrolyse mit 0,1 n HCl (0,5 Mol/Mol OR) gegeben, anschließend wurde das Lösungsmittel abrotiert. Zu dieser Mischung wurden noch 0,072 g Aminopropyltrimethoxyslian als Thermostarter zugegeben.

### 2. Beschichtung der Kunststofffolie

Als Kunststofffolie wurde eine TAC-Folie mit einer Dicke von 50 µm und Hardcoating verwendet. Die vorstehend aufgeführten Beschichtungssole M, H und L wurden nacheinander mit Hilfe einer Umkehrwalzen-Beschichtungsanlage (Typ BA 12300, Werner Mathis AG, Schweiz) auf die Kunststofffolie aufgebracht. Die Folienspannung betrug für alle 3 Beschichtungen 60 N. Die Vorvernetzung aller drei aufgebrachten Beschichtungen erfolgte über einen Zeitraum von 2 Minuten bei einer Ofentemperatur von 120°C. Zur Nachbehandlung wurde der aufgebrachte Schichtverbund als Rolle in einem vorgeheizten Ofen 30 min bei 120°C behandelt, entnommen und auf Raumtemperatur abgekühlt. Es ergab sich ein fehlerfreies Interferenz-Mehrschichtsystem auf der Kunststofffolie mit dem gewünschten Interferenzverhalten.

Für den Auftrag der 3 Schichten wurden folgende Beschichtungsparameter für den Umkehrwalzenbeschichter eingestellt:

| Sol | Walze | Drehung | Geschw. (m/min) | Spalt (µm) |
|---|---|---|---|---|
| M | Tauchwalze | links | 1,0 | |
| | Transferwalze | links | 1,0 | zwischen Tauch- u. Transferwalze = 100 |
| | Masterwalze | rechts | 1,0 | zwischen Tauch- u. Transferwalze = 100 |
| H | Tauchwalze | links | 1,0 | |
| | Transferwalze | links | 1,0 | zwischen Tauch- u. Transferwalze = 150 |
| | Masterwalze | rechts | 1,0 | zwischen Tauch- u. Transferwalze = 100 |
| L | Tauchwalze | links | 1,0 | |
| | Transferwalze | links | 1,0 | zwischen Tauch- u. Transferwalze = 100 |
| | Masterwalze | rechts | 1,0 | zwischen Tauch- u. Transferwalze = 100 |

## Patentansprüche

1. Kunststofffolie mit einem darauf aufgebrachten Interferenz-Mehrschichtsystem umfassend mindestens zwei Schichten, die jeweils erhältlich sind durch Verfestigung und/oder Wärmebehandlung einer Beschichtungszusammensetzung, die nanoskalige anorganische Feststoffteilchen mit polymerisierbaren und/oder polykondensierbaren organischen Oberflächengruppen enthält, unter Bildung einer über die polymerisierbaren und/oder polykondensierbaren organischen Oberflächengruppen vernetzten Schicht.

2. Kunststofffolie nach Anspruch 1, **dadurch gekennzeichnet, dass** die mindestens zwei Schichten unterschiedliche Brechungsindices aufweisen.

3. Kunststofffolie nach Anspruch 1 oder 2, **dadurch gekennzeichnet, dass** die Beschichtungszusammensetzung ein Sol ist.

4. Kunststofffolie nach einem oder mehreren der Ansprüche 1 bis 3, **dadurch gekennzeichnet, dass** die nanoskaligen Feststoffteilchen SiO₂, TiO₂, ZrO₂ und/oder Ta₂O₅ enthalten oder daraus bestehen.

5. Kunststofffolie nach einem oder mehreren der Ansprüche 1 bis 4, **dadurch gekennzeichnet, dass** die polymerisierbaren und/oder polykondensierbaren Oberflächengruppen ausgewählt sind aus organischen Resten, die über eine Acyl-, Methacryl-, Vinyl-, Allyl- oder Epoxygruppe verfügen.

6. Verbundmaterial umfassend ein Substrat, insbesondere ein Glas- oder Kunststoffsubstrat, eine Folie oder eine Lackschicht, und eine darauf auflaminierte Kunststofffolie nach einem oder mehreren der Ansprüche 1 bis 5.

7. Verfahren zur Herstellung einer Kunststofffolie mit Interferenz-Mehrschichtsystem nach mindestens einem der Ansprüche 1 bis 5, das folgende Stufen umfasst:
a) Aufbringen eines Beschichtungssols, das nanoskalige anorganische Feststoffteilchen mit polymerisierbaren und/oder polykondensierbaren organischen Oberflächengruppen enthält, auf die Kunststofffolie,
b) Verfestigung des in a) aufgebrachten Beschichtungssols, gegebenenfalls unter Vernetzung der polymerisierbaren und/oder polykondensierbaren organischen Oberflächengruppen der Feststoffteilchen unter Bildung einer zumindest teilweise organisch vernetzten Schicht,
c) Aufbringen eines weiteren Beschichtungssols, das nanoskalige anorganische Feststoffteilchen mit polymerisierbaren und/oder polykondensierbaren organischen Oberflächengruppen enthält, auf die in b) verfestigte Schicht,
d) Verfestigung des in c) aufgebrachten Beschichtungssols, gegebenenfalls unter Vernetzung der polymerisierbaren und/oder polykondensierbaren organischen Oberflächengruppen der Feststoffteilchen, unter Bildung einer weiteren verfestigten Schicht,
e) gegebenenfalls ein- oder mehrmaliges Wiederholen der Schritte c) und d) unter Bildung weiterer verfestigter Schichten,
und
f) Wärmebehandlung und/oder Bestrahlung des entstandenen Schichtverbunds, wobei dieser Schritt zusammen mit dem Schritt d) für die oberste Schicht ausgeführt werden kann.

8. Verfahren nach Anspruch 7, **dadurch gekennzeichnet, dass** ein Beschichtungssol mit einem Gesamtfeststoffgehalt von nicht mehr als 40 Gew.-%, aufgebracht wird.

9. Verfahren nach Anspruch 7 oder 8, **dadurch gekennzeichnet, dass** die Wärmebehandlung f) des Schichtverbunds bei Temperaturen im Bereich von 20 bis 200°C, vorzugsweise 80 bis 200°C, durchgeführt wird.

10. Verfahren nach mindestens einem der Ansprüche 7 bis 9, **dadurch gekennzeichnet, dass** die Schichten durch Umkehrwalzenbeschichtung aufgebracht werden.

11. Verwendung einer Kunststofffolie nach mindestens einem der Ansprüche 1 bis 5 oder eines Verbundmaterials nach Anspruch 6 als Antireflexsystem, Reflexsystem, Reflexfilter, Farbfilter, Lichtverstärker, Polarisationsfilter, Retarderfolien oder als Effektbeschichtung auf lackierten Oberflächen.

12. Verwendung nach Anspruch 11 als Antireflexsystem, Reflexfilter, Farbfilter oder Lichtverstärker in Computerbildschirmen, Displaygläsern und Linsen von Mobiltelefonen, Architekturglas und Automobilfensterscheiben.

## Claims

1. A polymer film on which there has been applied a multilayer optical interference system comprising at least two layers each obtainable by solidifying and/or heat-treating a coating composition comprising nanoscale inorganic particulate solids having polymerizable and/or polycondensable organic surface groups to form a layer which is crosslinked by way of the polymerizable and/or polycondensable organic surface groups.

2. The polymer film as claimed in claim 1, wherein the at least two layers have different refractive indices.

3. The polymer film as claimed in claim 1 or 2, wherein the coating composition is a sol.

4. The polymer film as claimed in one or more of claims 1 to 3, wherein the nanoscale particulate solids consist of or comprise SiO₂, TiO₂, ZrO₂ and/or Ta₂O₅.

5. The polymer film as claimed in one or more of claims 1 to 4, wherein the polymerizable and/or polycondensable surface groups are selected from organic radicals which possess an acyl, methacryloyl, vinyl, allyl or epoxy group.

6. A composite material comprising a substrate, in particular a glass or plastics substrate, a film or a paint layer, and, laminated thereon, a polymer film as claimed in one or more of claims 1 to 5.

7. A process for producing a polymer film with a multilayer interference system, as claimed in at least one of claims 1 to 5, which comprises the following steps:
a) applying a coating sol comprising nanoscale inorganic particulate solids having polymerizable and/or polycondensable organic surface groups to the polymer film,
b) solidifying the coating sol applied in a), where appropriate with crosslinking of the polymerizable and/or polycondensable organic surface groups of the particulate solids, to form an at least partly organically crosslinked layer,
c) applying a further coating sol comprising nanoscale inorganic particulate solids having polymerizable and/or polycondensable organic surface groups to the layer solidified in b),
d) solidifying the coating sol applied in c), where appropriate with crosslinking of the polymerizable and/or polycondensable organic surface groups of the particulate solids, to form a further solidified layer,
e) if desired, repeating steps c) and d) one or more times to form solidified layers,
and
f) heat-treating and/or irradiating the resultant layer assembly, it being possible to perform this step together with step d) for the topmost layer.

8. The process as claimed in claim 7, wherein a coating sol having a total solids content of not more than 40% by weight is applied.

9. The process as claimed in claim 7 or 8, wherein the heat treatment f) of the layer assembly is conducted at temperatures in the range from 20 to 200°C, preferably from 80 to 200°C.

10. The process as claimed in at least one of claims 7 to 9, wherein the layers are applied by reverse-roll coating.

11. The use of a polymer film as claimed in at least one of claims 1 to 5 or of a composite material as claimed in claim 6 as an antireflection system, reflection system, reflection filter, color filter, light intensifier, polarization filter or retarder film or as an effect coating on painted surfaces.

12. The use as claimed in claim 11 as an antireflection system, reflection filter, color filter or light intensifier in computer screens, display glasses and lenses of cellphones, architectural glass, and automobile window glass.

## Revendications

1. Feuille de plastique avec un système multicouche à interférences appliqué dessus, comprenant au moins deux couches, qui peuvent être obtenues chacune par solidification et/ou traitement thermique d'une composition d'enduction qui contient des particules solides inorganiques de l'ordre de grandeur du nanomètre avec des groupes superficiels polymérisables et/ou polycondensables, moyennant la formation d'une couche réticulée par l'intermédiaire des groupes superficiels polymérisables et/ou polycondensables.

2. Feuille de plastique selon la revendication 1, **caractérisée en ce que** les au moins deux couches présentent des indices de réfraction différents.

3. Feuille de plastique selon la revendication 1 ou 2, **caractérisée en ce que** la composition du revêtement est un sol.

4. Feuille de plastique selon l'une ou plusieurs des revendications 1 à 3, **caractérisée en ce que** les particules solides de l'ordre de grandeur du nanomètre contiennent du SiO₂, du TiO₂, du ZrO₂ et/ou du Ta₂O₅ ou consistent en ceux-ci.

5. Feuille de plastique selon l'une ou plusieurs des revendications 1 à 4, **caractérisée en ce que** les groupes superficiels polymérisables et/ou polycondensables sont choisis parmi des radicaux organiques qui disposent de groupes acyles, méthacryles, vinyles, allyles ou époxydes.

6. Matériau composite comprenant un substrat, en particulier un substrat de verre ou de plastique, une feuille ou une couche de laque, et une feuille de plastique selon l'une ou plusieurs des revendications 1 à 5 stratifiée dessus.

7. Procédé de fabrication d'une feuille de plastique avec un système multicouche à interférence selon au moins l'une des revendications 1 à 5, qui comprend les étapes suivantes :
a) application d'un sol de revêtement qui contient des particules solides inorganiques de l'ordre de grandeur du nanomètre avec des groupes organiques superficiels polymérisables et/ou polycondensables sur la feuille de plastique,
b) solidification du sol de revêtement appliqué en a), le cas échéant moyennant la réticulation des groupes organiques superficiels polymérisables et/ou polycondensables des particules solides moyennant la formation d'une couche au moins partiellement réticulée organiquement,
c) application sur la couche solidifiée en b) d'un autre sol de revêtement qui contient des particules solides inorganiques de l'ordre de grandeur du nanomètre avec des groupes organiques superficiels polymérisables et/ou polycondensables,
d) solidification du sol de revêtement appliqué en c), le cas échéant moyennant la réticulation des groupes organiques superficiels polymérisables et/ou polycondensables des particules solides moyennant la formation d'une autre couche solidifiée,
e) le cas échéant, une ou plusieurs répétitions des étapes c) et d) moyennant la formation d'autres couches solidifiées,
et
f) traitement thermique et/ou irradiation du composite créé, sachant que cette étape peut être effectuée ensemble avec l'étape d) pour la couche supérieure.

8. Procédé selon la revendication 7, **caractérisé en ce que** l'on applique un sol de revêtement avec une teneur totale en substance solide de pas plus de 40 % en poids.

9. Procédé selon la revendication 7 ou 8, **caractérisé en ce que** le traitement thermique f) du composite en couches s'effectue à des températures dans l'intervalle de 20 à 200 °C, de préférence de 80 à 200 °C.

10. Procédé selon l'une au moins des revendications 7 à 9, **caractérisé en ce que** les couches sont appliquées par revêtement par cylindre inverseur.

11. Utilisation d'une feuille de plastique selon l'une au moins des revendications 1 à 5 ou d'un matériau composite selon la revendication 6 comme système antiréflexion, système de réflexion, filtre de couleur, amplificateur de lumière, filtre de polarisation, feuille retardatrice, ou comme enduit à effet sur des surfaces peintes.

12. Utilisation selon la revendication 11 comme système antiréflexion, filtre de réflexion, filtre de couleur ou amplificateur de lumière dans des moniteurs d'ordinateur, des verres et des lentilles d'affichage de téléphones portables, des verres architecturaux et des glaces d'automobiles.
